# EUROPÄISCHE PATENTSCHRIFT

(11) **EP 2 618 657 B1**
(45) Veröffentlichungstag und Bekanntmachung des Hinweises auf die Patenterteilung: **18.11.2015**
(21) Anmeldenummer: 11813668.8
(22) Anmeldetag: 23.09.2011
(51) Int. Cl.: A01L 7/02, A01L 1/04

(54) **HUFEISEN FÜR REITTIERHUFE, INSBESONDERE FÜR PFERDE, SOWIE VERBINDUNGSTEIL FÜR UND VERFAHREN ZUR HERSTELLUNG EINES DERARTIGEN HUFEISENS**
SHOE FOR THE HOOFS OF RIDING ANIMALS, IN PARTICULAR FOR HORSES, AND CONNECTION PART FOR AND METHOD OF PRODUCING SUCH A SHOE
FER À CHEVAL POUR SABOTS DE BÊTE DE SELLE, EN PARTICULIER POUR DES CHEVAUX, AINSI QUE PARTIE DE LIAISON ET PROCÉDÉ POUR LA FABRICATION D'UN TEL FER À CHEVAL

(30) Priorität: 24.09.2010 DE 102010037762
(43) Veröffentlichungstag der Anmeldung: 31.07.2013
(73) Patentinhaber: Stinauer, Georg, 85665 Moosach (DE)
(72) Erfinder: Stinauer, Georg, 85665 Moosach (DE)
(74) Vertreter: Eder, Thomas
(86) Internationale Anmeldenummer: PCT/DE2011/075232
(87) Internationale Veröffentlichungsnummer: WO 2012/062304

(56) Entgegenhaltungen:
- WO-A1-2010/102633
- AT-U1- 10 922
- US-A- 6 076 607

## Beschreibung

Die Erfindung betrifft ein Hufeisen für Reittierhufe, insbesondere für Pferde, mit den Merkmalen des Oberbegriffs des Patentanspruchs 1 sowie ein Verbindungsteil zur Verbindung zweier Hufeisenhälften zu einem derartigen Hufeisen und ein Verfahren zur Herstellung eines derartigen, an einen Huf angepassten Hufeisens unter Verwendung eines herkömmlichen einteiligen Hufeisens.

Um Reittierhufe, insbesondere von Pferden, gegen übermäßiges Abnutzen durch das Laufen auf rauem Untergrund zu schützen, werden üblicherweise Hufeisen verwendet. Ein Hufeisen wird dabei in der Regel auf den Huf des Reittieres genagelt. Gewöhnliche Hufeisen bestehen überwiegend aus Metall und weisen eine im Wesentlichen U-förmige oder Ω-förmige Form auf. Diese Hufeisen werden zur Vereinfachung und Beschleunigung des Beschlagvorgangs in verschiedenen Größen vorgefertigt. Der Hufschmied sucht aus den zur Verfügung stehenden Größen der Hufeisen die am nächsten kommende Größe heraus und passt das betreffende Hufeisen durch schmieden an die jeweilige spezielle Form des zu beschlagenden Hufs an.

Gewöhnliche Hufeisen sind dabei starr ausgebildet. Ein derartiges Hufeisen blockiert zumindest zu einem wesentlichen Teil Bewegungen des Hufs, die beim Aufsetzen und Abheben des Hufs auf dem Untergrund infolge der Elastizität des Hufs auftreten. Derartige Bewegungen des Hufs entstehen sowohl in der beim Aufsetzen des Hufs auf dem Untergrund horizontalen Ebene als auch in der Vertikalen, beispielsweise bei schiefem Untergrund oder einseitiger Belastung des Hufs während des Bewegungsvorgangs.

Das Tier wird somit durch die zumindest teilweise Blockierung der Bewegungen des Hufs in sich in seiner Tritt- oder Standsicherheit behindert. Das Aufnageln des Hufeisens auf die Hufunterseite erfolgt üblicherweise so, dass die Nägel vornehmlich im vorderen Bereich (Zehenbereich) und dem mittleren Bereich (Seitenwand) eingeschlagen werden, da hier der elastische Bewegungsumfang geringer ist als im hinteren Bereich (Trachte). Dies führt dazu, dass der Huf insbesondere im Bereich der Trachte dennoch einen gewissen Bewegungsumfang ausführen kann, wodurch sich insbesondere im Bereich der Trachte ein höherer Abrieb ergibt als im Bereich der Zehe oder Seitenwand. Dies führt zu einer Schiefstellung des Hufs von vorn nach hinten, die sich nicht nur negativ auf die Tritt- und Standsicherheit auswirkt, sondern das Tier auch in seiner Anatomie nachteilig beeinflusst.

Dies führt neben dem generellen Hornwachstum dazu, dass der betreffende Huf relativ frühzeitig, beispielsweise nach sechs bis acht Wochen, neu beschlagen werden muss.

Zur Linderung dieser Problematik wurden bereits gelenkige Hufeisen entwickelt, wie sie beispielsweise in der DE 26 04 607 A1, der AT 10 922 U1 oder der US 6,076,607 beschrieben sind. Derartige Hufeisen bestehen dabei aus zwei Hälften, die im Zehenbereich gelenkig verbunden sind. Hierzu kann eine Hälfte ein erstes Gelenkelement aufweisen, welches in ein hierzu komplementäres, damit zusammenwirkendes zweites Gelenkelement eingreift. Nach einer anderen Variante kann auch ein separates Verbindungsteil vorgesehen werden, welches die beiden Hälften verbindet und aus einem elastischen Material besteht (z.B. WO 2010/102633 A1, US 6,082,462). Das Verbindungselement kann aus Kunststoff bestehen und beiderseitige Fortsätze aufweisen, die in Ausnehmungen der einander zugewandten Enden der zu verbindenden Hufeisenhälften eingreifen (vgl. AT 10 922 U1).

Nachteilig bei diesen bekannten Hufeisen ist die teilweise aufwändige Konstruktion, insbesondere die aufwändige Fertigung des Verbindungsteils oder die Tatsache, dass das Verbindungsteil die beiden Hufeisenhälften vor der Montage nicht ausreichend fest verbindet, so dass die Montage erschwert wird.

Ausgehend von diesem Stand der Technik liegt der Erfindung die Aufgabe zugrunde, ein Hufeisen für Reittierhufe, insbesondere für Pferde, zu schaffen, welches eine ausreichende Elastizität aufweist, um die während des Aufsetzens und Abhebens des Hufs auftretenden Bewegungen innerhalb des Hufs nicht zu blockieren und welches einfach und kostengünstig herstellbar ist. Des Weiteren soll das erfindungsgemäße Hufeisen auch dafür geeignet sein, herkömmliche einteilige, starre Hufeisen zu einem flexiblen Hufeisen nachzurüsten und diese Nachrüstung vor Ort, insbesondere während des Beschlagvorgangs vorzunehmen.

Die Erfindung löst diese Aufgabe mit den Merkmalen des Patentanspruchs 1 bzw. der Patentansprüche 5 und 10.

Die Erfindung geht von der Erkenntnis aus, dass ein zweiteiliges Hufeisen, wie es beispielsweise in der AT 10 922 U1 (Fig. 2) dargestellt ist, einfacher hergestellt und montiert werden kann, wenn das Verbindungsteil so ausgestaltet ist, dass die einander gegenüberliegenden Eingriffsbereiche in entsprechende, hierzu im Wesentlichen komplementäre Ausnehmungen, die in den einander zugewandten Enden der Hufeisenhälften vorgesehen sind, eingreifen, wobei die Geometrie der Ausnehmungen und der Eingriffsbereiche so ausgestaltet ist, dass die Hufeisenhälften formschlüssig oder kraft- und formschlüssig mit dem Verbindungsteil und damit auch miteinander verbunden sind.

Die einander zugewandten Enden der Hufeisenhälften weisen hierzu Ausnehmungen auf, die so ausgestaltet sind, dass diese in Richtung der Stirnseite des betreffenden Endes der Hufeisenhälfte offen ist. Die Weite der Ausnehmung im Bereich der Stirnseite ist kleiner als in wenigstens einem der Stirnseite vorgelagerten Bereich. Hierdurch kann insbesondere ein puzzleartiges Verbindungsteil verwendet werden. Die Abmessungen der Eingriffsbereiche können so gewählt werden, dass diese (zumindest in Teilbereichen) größer sind als die hierzu komplementären Bereiche der betreffenden Ausnehmung. Das Verbinden von Verbindungsteil und Hufeisenhälfte erfolgt in diesem Fall durch das Einpressen des Eingriffsbereichs in die Ausnehmung, was durch das Verwenden eines elastischen Materials für das Verbindungsteil ohnehin möglich ist. Denn das Verbindungsteil wird erfindungsgemäß aus einem ausreichend elastischen Material verwendet, wobei die Elastizität so gewählt wird, dass unter Berücksichtigung der Geometrie des Verbindungsteils die in sich starren Hufeisenhälften die notwendigen Bewegungen des Hufs durchführen können.

Durch diese Ausbildung ergibt sich der Vorteil, dass das erfindungsgemäße Hufeisen vor dem Verbinden mit dem Huf, beispielsweise durch Nageln, eine ausreichende Stabilität aufweist, um einfach weiterverarbeitet zu werden. Insbesondere besteht nicht die Gefahr, dass die Einzelteile des Hufeisens beim Aufsetzen auf den Huf oder beim Aufnageln auseinander fallen.

Wie andere gelenkige Hufeisen fördert das erfindungsgemäße Hufeisen durch das Ermöglichen der Hufbewegungen die Tritt- und Standsicherheit des Tiers, wodurch gewünschte Muskel- und Sehnenbewegungen nicht blockiert werden. Dies wirkt sich auf das Wohlbefinden und die Gesundheit des Tiers aus.

Weiterhin kann der "Stimmgabeleffekt", den ein einteiliges, starres Hufeisen aufweist, kaum mehr auftreten. Vibrationen, angeregt durch das Auftreten und Abheben des Hufs vom Untergrund werden reduziert bzw. vermieden. Hierdurch kann auch das Trittgeräusch auf harten Untergründen, insbesondere Asphalt, verringert werden.

Gleichzeitig kann eine Stollenbildung an der Unterseite des Hufs bei Schnee oder Matsch bzw. bei anderen klebrigen, Stollen bildenden Untergründen vermieden oder reduziert werden, da der Huf eine praktisch ungehinderte Bewegung in der Ebene der Hufunterseite bzw. in der Ebene des Hufeisens ausführen kann. Sich bildende Stollen können somit während der Bewegung leichter gelöst werden und herausfallen.

Schließlich resultiert aus einer ausreichend gewählten Elastizität des Materials und einer geeigneten Geometrie des Verbindungsteils auch der Vorteil, dass das Hufeisen mit dem Huf "mitwachsen" kann. Insbesondere durch das Hornwachstum verändert bzw. verbreitert sich die Auftrittfläche des Hufs. Diesem Wachstum kann das erfindungsgemäße Hufeisen sowohl durch eine Dehnung im Zehenbereich des Hufs als auch durch ein Öffnen der Hufeisenhälften (d.h. ein Nach-außen-Bewegen der hinteren Enden der Hufeisenhälften gegenüber dem Verbindungsbereich) folgen.

Nach einer bevorzugten Ausgestaltung der Erfindung können die Ausnehmungen in den einander zugewandten Enden der Hufeisenhälften als zylindrische Bohrungen ausgeführt sein, die senkrecht zur Ebene liegen, welche die Lauffläche des Hufeisens bildet. Der Abstand der Achse der Bohrungen von der Stirnfläche der betreffenden Hufeisenhälfte ist dabei kleiner zu wählen als der Radius der Bohrungen. Wird der Eingriffsbereich des Verbindungsteils hierzu komplementär ausgebildet, ergibt sich eine puzzleartige formschlüssige oder kraft- und formschlüssige Verbindung.

Werden die Abmessungen des Eingriffsteils und der Ausnehmung - unabhängig von deren spezieller Form - so gewählt, dass die Abmessungen des Eingriffsbereichs geringfügig kleiner sind als die Innenabmessungen der Ausnehmung (zumindest in einem Teilbereich), so ergibt sich eine formschlüssige Verbindung. Um ein Herausfallen des Verbindungsteils, auch nach dem Beschlagen, zu vermeiden, können die betreffenden Ausnehmungen als Sackausnehmungen, insbesondere Sacklöcher, ausgebildet sein, die vorzugsweise eine Tiefe aufweisen, die im Wesentlichen der Dicke der Eingriffsbereiche des Verbindungsteils entsprechen.

Werden die Ausnehmungen als Durchgangsausnehmungen, insbesondere Durchgangsbohrungen ausgebildet, so können an der dem Huf zugewandten Fläche jeweils Einsenkungen mit einer vorbestimmten Tiefe vorgesehen sein, die hinsichtlich ihrer Abmessungen größer gewählt sind als die Abmessungen (Weite) der Durchgangsausnehmung bzw. Durchgangsbohrung. Ein damit zusammenwirkender Eingriffsbereich kann einen gegenüber seinem Unterteil (d.h. dem in Richtung auf die Hufauftrittfläche verlaufenden Bereich) größeren Kopfbereich aufweisen, der in die erweiterte Einsenkung der Durchgangsausnehmung bzw. in die erweiterte Einsenkung der Durchgangsbohrung eingreift. Hierdurch wird nach dem Befestigen des Hufeisens am Huf ein Herausfallen des Eingriffsteils auch dann verhindert, wenn die Eingriffsbereiche des Verbindungsteils nur formschlüssig in den betreffenden Ausnehmungen gehalten ist.

Vorteilhafter ist es jedoch, zusätzlich zur rein formschlüssigen Verbindung auch eine kraftschlüssige Verbindung zwischen den Hufeisenhälften und dem Verbindungsteil vorzusehen. Hierdurch kann, wie bereits vorstehend ausgeführt, zumindest ein Teilbereich des Eingriffsbereichs in seinen Abmessungen größer ausgebildet sein, als der entsprechend korrespondierende Teilbereich der Ausnehmung. Hierdurch muss das Verbindungsteil mit seinen Eingriffsbereichen in die zugehörigen Ausnehmungen eingepresst werden, wodurch sich eine kraft- und formschlüssige Verbindung ergibt.

Das Hufeisen ist somit nach dem Zusammensetzen der einzelnen Teile bereits vor dem Beschlagvorgang so stabil, dass keine Gefahr besteht, dass das Hufeisen während des Beschlagvorgangs auseinander fällt, bevor dies sicher am Huf fixiert ist, oder dass nach dem Beschlagvorgang das Verbindungsteil aus den Ausnehmungen heraus fällt und verloren geht.

Hierzu bietet es sich an, das Verbindungsteil zumindest in seinen Eingriffsbereichen leicht konisch auszubilden, so dass das Verbindungsteil einfach in Durchgangsausnehmungen bzw. Durchgangsbohrungen mit konstanter Weite eingesetzt werden kann. Nach dem Einsetzen mit dem unteren, konisch zulaufenden Teil kann das Verbindungsteil dann in die Ausnehmungen eingepresst, beispielsweise eingeschlagen werden. Das Einschlagen erfolgt dabei von der Hufseite des Hufeisens her, so dass das Verbindungsteil nach dem Beschlag sicher gehalten ist.

Nach einer Ausgestaltung der Erfindung kann das Verbindungsteil zwischen den Eingriffsbereichen einen Zentralbereich aufweisen, dessen voneinander abgewandte Stirnflächen, die seitlich des rückwärtigen Endes der Eingriffsbereiche vorgesehen sind, als Anlageflächen für die Stirnflächen der Enden der Hufeisenhälften ausgebildet sind (d.h. die Stirnflächen seitlich der stirnseitigen Öffnung der betreffenden Ausnehmung). Die Ausdehnung der als Anlageflächen dienenden Stirnflächen des Zentralbereichs entsprechen vorzugsweise im Wesentlichen der Ausdehnung der Stirnflächen der Enden der Hufeisenhälften.

Ein derartiger Zentralbereich, der sich im Zehenbereich des Hufs befindet, kann neben seiner Flexibilität durch eine geeignete Materialwahl auch den Gleitvorgang beim Aufsetzen bzw. Abheben eines Hufs dem natürlichen Gleitvorgang annähern. Während bei starren Hufeisen aus Metall der Gleitvorgang, d.h. das Rutschen des Hufeisens über den Untergrund beim Aufsetzen verlängert ist und das Tier in seiner Trittsicherheit negativ beeinflusst, kann das Material für das Verbindungsteil so gewählt werden, dass dieses ähnliche Gleiteigenschaften aufweist wie das Horn, aus dem der Huf besteht.

Nach einer weiteren Ausführungsform kann das Verbindungsteil eine Montageplatte aufweisen, welche an einer Stirnseite der Eingriffsbereiche oder einer Stirnseite der Eingriffsbereiche und des Zentralbereichs vorgesehen ist und welche vorzugsweise einstückig mit den Eingriffsbereichen oder den Eingriffsbereichen und dem Zentralbereich verbunden ist.

Die Geometrie der Montageplatte kann dabei vorzugsweise so gewählt sein, dass sich die Montageplatte im montierten Zustand zumindest bis in jeweils einen Bereich der beiden Hufeisenhälften erstreckt, in welchem jeweils wenigstens ein Loch für einen Hufnagel vorgesehen ist.

Die Geometrie der Montageplatte kann, vorzugsweise zusätzlich, so gestaltet sein, dass jeweils die gesamte Stirnseite der Eingriffsbereiche, vorzugsweise die gesamte Stirnseite der Eingriffsbereiche und die Stirnseite des Zentralbereichs mit der Montageplatte verbunden ist.

Die Erfindung ermöglicht es, ein derartiges elastisches Hufeisen auch aus handelsüblichen, vorgefertigten Rohlingen starrer Hufeisen vor Ort herzustellen. Das Beschlagen kann erfindungsgemäß auf einfache Weise so erfolgen, dass zunächst ein herkömmliches einteiliges Hufeisen an den Huf angepasst wird, insbesondere durch schmieden. Anschließend kann das Hufeisen in zwei Hälften getrennt werden, wozu ein einfaches Werkzeug wie eine Säge oder ein Trennschleifer verwendet werden kann. Anschließend können die Ausnehmungen in Form von einfachen Bohrungen hergestellt werden, wobei, wie vorstehend erläutert, der Abstand der Mitte der Bohrung vom Ende der Stirnfläche kleiner gewählt wird als der Radius der Bohrung. Hierdurch ergibt sich eine "puzzleartige" Ausnehmung. Als Durchmesser für die Bohrung kann ein Wert gewählt werden, der sich mittels eines Bohrers realisieren lässt, den jeder Hufschmied ohnehin mitführt.

Die Vorgänge des Bohrens und Trennens können dabei selbstverständlich auch in ihrer Reihenfolge vertauscht werden.

Damit kann ein Hufschmied derartige Hufeisenhälften auf einfache Weise unter Verwendung des von ihm ohnehin mitgeführten Werkzeugs herstellen.

Anschließend muss lediglich das Verbindungsteil in die Ausnehmungen eingepresst werden. Hier bietet sich insbesondere ein Verbindungsteil mit zumindest konischen Verbindungsbereichen (in Richtung senkrecht zur Längserstreckung des Verbindungsteils) an. Selbstverständlich kann jedoch beispielsweise auch eine Ausnehmung mit Senkung durch die Verwendung eines Bohrers entsprechend größeren Durchmessers hergestellt werden. Hierdurch kann beispielsweise ein Verbindungsteil mit einem vorstehend erläuterten Kopfbereich verwendet werden.

Weitere Ausgestaltungen der Erfindung ergeben sich aus den Unteransprüchen.

Die Erfindung wird nachfolgend anhand in der Zeichnung dargestellter Ausführungsbeispiele näher erläutert. In der Zeichnung zeigen:
- Fig. 1: eine Draufsicht eines Hufeisens nach der Erfindung;
- Fig. 2: eine Draufsicht, eine Seitenansicht und eine perspektivische Ansicht des Verbindungsteils in Fig. 1;
- Fig. 3: eine perspektivische Ansicht einer weiteren Ausführungsform eines Verbindungsteils,
- Fig. 4: eine Draufsicht (Fig. 4a) auf und eine Seitenansicht (Fig. 4b) für eine weitere Ausführungsform der Erfindung mit einer elastischen Montageplatte.

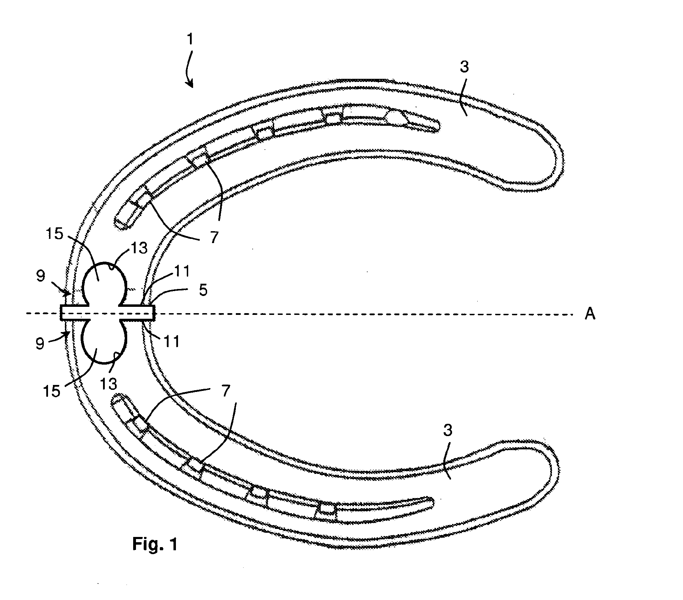

Das in Fig. 1 dargestellte Hufeisen 1 besteht aus zwei Hufeisenhälften 3, die über ein Verbindungsteil 5 kraft- und formschlüssig verbunden sind. Die Hufeisenhälften 3 können in üblicher Weise ausgebildet sein und entsprechen einem üblichen starren, metallischen Hufeisen, das in seiner Symmetrieebene A getrennt wurde.

Das Hufeisen kann mittels nicht näher dargestellter Nägel in üblicher Weise am Huf eines Reittiers, insbesondere eines Pferdes, befestigt werden, wobei die Nägel in die Löcher 7 eingesetzt und in den Huf eingeschlagen werden.

Das Verbindungsteil 5 besteht aus einem elastischen Material, wobei die Geometrie und das Material so gewählt sind, dass die beiden Hufeisenhälften die gewünschten Bewegungen des Hufs mit ausführen können. Beispielsweise kann das Verbindungsteil 5 aus einem Kunststoff oder Gummi mit der gewünschten Festigkeit und Elastizität bestehen und kann kostengünstig, beispielsweise durch Spritzgießen, Vulkanisieren oder Stanzen, hergestellt werden.

Jede Hufeisenhälfte 3 weist in ihrem Ende 9, welches dem betreffenden Ende 9 der jeweils anderen Hufeisenhälfte 3 zugewandt ist, eine in Richtung der Stirnseite 11 des Endes 9 offene Ausnehmung 13 auf, wobei die Weite der Ausnehmung 13 an der Stirnseite 11 kleiner ist als in dem jeweils vorgelagerten Bereich in Richtung auf das Innere der betreffenden Hufeisenhälfte 3. Die Weite kann bei einer Ausnehmung mit in Richtung senkrecht zur Zeichenebene konstanter Weite als Breite der Ausnehmung in Ebenen parallel zur Symmetrieebene A definiert werden.

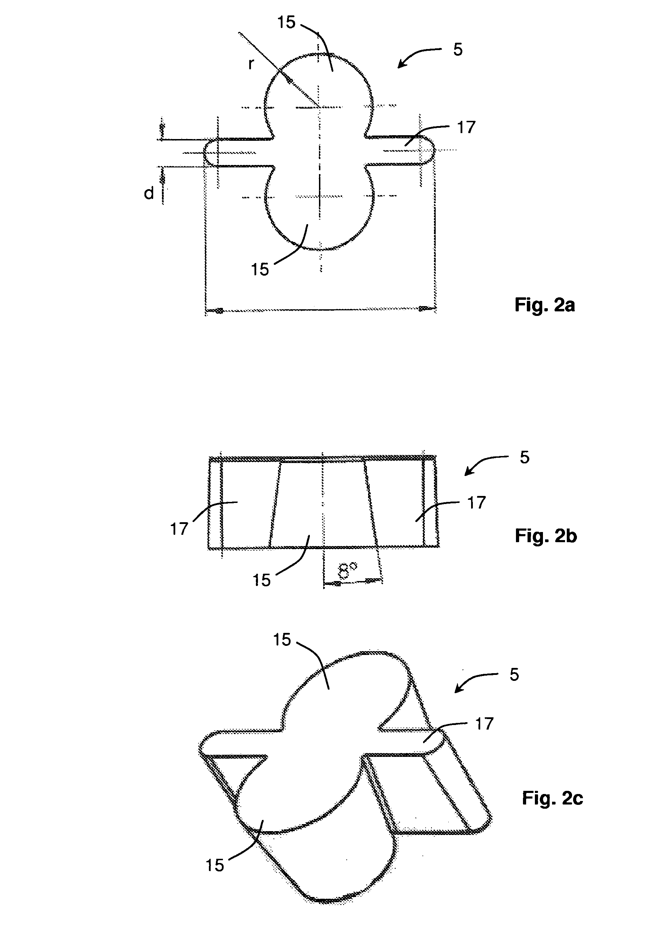

Das Verbindungsteil 5, das in Fig. 1 die Hufeisenhälften 3 verbindet, ist in Fig. 2 vergrößert und in mehreren Ansichten dargestellt. Die Draufsicht gemäß Fig. 2a zeigt, dass das Verbindungsteil 5 zwei Eingriffsbereiche 15 aufweist, die, wie aus Fig. 2b (Seitenansicht) und Fig. 2c (perspektivische Ansicht) erkennbar in der Richtung senkrecht zur Zeichenebene leicht konisch verlaufend ausgebildet sind. Die Eingriffsbereiche 15 sind dabei im Querschnitt (in Ebenen parallel zur Zeichenebene) kreissegmentförmig ausgebildet. Bei den Eingriffsbereichen 15 handelt es sich somit um Kegelstümpfe, die in einer Ebene senkrecht zur Längsachse abgeschnitten sind. Die Konizität beträgt vorzugsweise 2 bis 10 Grad, und kann in geeigneter Weise unter Berücksichtigung der Geometrie und Elastizität des Materials so gewählt werden, dass ein einfaches Einsetzen der Eingriffsbereiche 15 in die Ausnehmungen 13 bei gleichzeitigem ausreichend festem Presssitz gewährleistet ist.

Die Eingriffsbereiche 15 sind an einem Zentralbereich 17 in Form einer Wandung mit vorbestimmter Dicke d vorgesehen. Die Stärke (Ausdehnung in einer Richtung senkrecht zur Zeichenebene) des Verbindungsteils 5 entspricht im Wesentlichen der Stärke der Hufeisenhälften im Bereich deren Enden 9.

Die Breite des Zentralbereichs 17, d.h. die Abmessung d, kann entsprechend den Anforderungen gewählt werden. Diese Breite bestimmt, abhängig von der Elastizität des Materials, auch die Steifheit des fertigen Hufeisens 1. Des Weiteren wird das Hufeisen im Zehenbereich (d.h. im Bereich des Verbindungsteils 5) aufgesetzt, so dass die erste Berührung zwischen Hufeisen und Untergrund zunächst im Bereich des Verbindungsteils 5 besteht. Dies gilt zumindest dann, wenn das Verbindungsteil 5 mit seiner Oberfläche über die Lauffläche des Hufeisens 1 hinausragt. Die eingangs angesprochene Gleitphase zwischen dem Zehenbereich und dem Untergrund wird damit durch die Größe der Auflagefläche und damit durch die geometrische Ausdehnung des Verbindungsteils 5 sowie durch die Oberflächenbeschaffenheit des Verbindungsteils 5 beeinflusst.

Das Verbindungsteil 5 ist im Bereich seiner Unterseite, die gegenüber in den Eingriffsbereichen 15 gegenüber der Oberseite konisch verjüngt ist, hinsichtlich der Abmessungen so gewählt, dass die Verbindungsbereiche 15 ohne weiteres in die Ausnehmungen 13 eingesetzt werden. Ab einer gewissen Tiefe muss dann das Verbindungsteil 5 infolge der sich konisch erweiterten Oberseite mit entsprechender Kraft in die Ausnehmungen 13 eingepresst werden. Die Abmessungen sind so gewählt, dass sich in der vollständig eingepressten Stellung ein sicheres Fixieren und Halten der Hufeisenhälften 3 ergibt.

Das Einpressen der konischen Bereiche 15 in die Ausnehmungen 13 erfolgt von der Hufseite des Hufeisens 1 aus, um nach dem Beschlagen sicherzustellen, dass sich das Verbindungsteil 5 auch bei hoher Belastung nicht löst und verloren wird.

Anstelle der konischen Ausbildung des Verbindungsteils 5 könnten die Verbindungsbereiche 15 selbstverständlich auch so hergestellt werden, dass diese relativ lose in die Ausnehmungen 13 eingesetzt werden können. Allerdings ergibt sich dabei der Nachteil, dass die Hufeisenhälften vor der Montage nicht sicher verbunden sind. Dies führt zu einer Erschwerung des Beschlagvorgangs.

Zudem müsste sichergestellt sein, dass nach dem Beschlagen das Verbindungsteil 15 nicht verloren gehen kann. Hierzu kann beispielsweise an der Hufseite der Hufeisenhälften 3 eine Einsenkung mit erweiterten Abmessungen gegenüber der übrigen Ausnehmung 13 vorgesehen sein. Das Verbindungsteil kann dann an seiner hufseitigen Oberfläche ein Kopfteil aufweisen, welches gegenüber dem unteren Teil verbreitert ist. Das Kopfteil kann dann in die in Richtung der Hufseite der Ausnehmung vorgesehene Erweiterung eingreifen. Hierdurch wird auch ohne kraftschlüssige Verbindung ein Verlieren des Verbindungsteils bei einem am Huf befestigten Hufeisen verhindert.

Wie bereits vorstehend erläutert, kann anstelle eines derartigen Kopfteils und einer auf der Hufseite vorgesehenen Erweiterung der Ausnehmung eine sacklochartige Ausnehmung vorgesehen sein. Auch hier wird ohne kraftschlüssige Verbindung allein durch den Formschluss eine Verbindung zwischen den Hufeisenhälften erreicht und zudem ein Verlieren des Verbindungsteils verhindert.

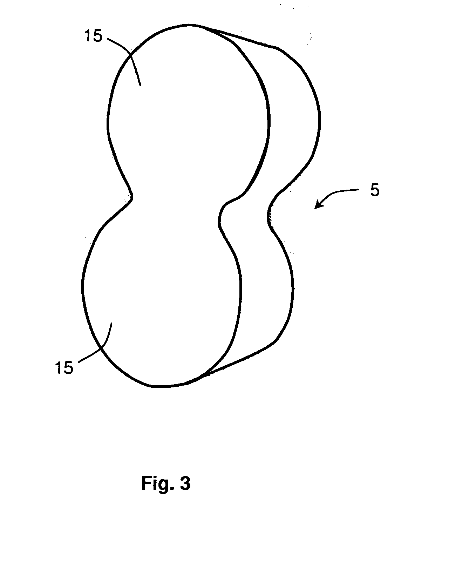

Die in Fig. 3 dargestellte weitere Ausführungsform eines Verbindungsteils 5 besteht im Wesentlichen nur aus zwei miteinander einstückig verbundenen Eingriffsbereichen 15, die wiederum konisch ausgebildet sind. Es wird lediglich auf einen Zentralbereich verzichtet. Bei dieser Version eines Verbindungsteils 15 werden die Hufeisenhälften 3 derart miteinander verbunden, dass die einander gegenüberliegenden Stirnseiten 11 aneinander anliegen oder allenfalls einen sehr kleinen Abstand aufweisen. Auf einen Steg in Form eines Zentralbereichs 17, wie dieser in den Fig. 1 und 2 dargestellt ist, wird verzichtet. Ein derartiges Verbindungsteil ist infolge des Wegfalls des Zentralbereichs 11 noch einfacher zu fertigen und damit kostengünstiger.

Zudem muss nach dem Anpassen des einteiligen Hufeisens 1 und dem Trennen in die beiden Hufeisenhälften 3 die Dicke d des Zentralbereichs nicht mehr berücksichtigt werden, so dass nach einem Trennen des einteiligen Hufeisens 1 in die beiden Hufeisenhälften 3 die Enden nicht mehr entsprechend weiter gekürzt werden müssen, um zu gewährleisten, dass nach einem Einsetzen des Verbindungsteils 5 das erneut zusammengesetzte Hufeisen 1 dieselbe Passform aufweist, wie das zuvor an den speziellen Huf angepasste einteilige Hufeisen.

Wie bereits ausgeführt, kann das Herstellen eines derartigen flexiblen Hufeisens 1 vor Ort, d.h. beim Beschlagen eines Hufs vorgenommen werden. Nach dem Anpassen des beispielsweise vorgefertigten, einteiligen Hufeisens kann dieses in die beiden Hufeisenhälften getrennt werden. Anschließend können die Ausnehmungen für die Eingriffsbereiche 15 des Verbindungsteils 5 hergestellt werden, beispielsweise durch das Herstellen entsprechender zylindrischer Bohrungen. Diese beiden Vorgänge können auch in ihrer Reihenfolge vertauscht werden. Denn die Bohrungen können selbstverständlich auch bereits im noch einteiligen angepassten Hufeisen erstellt werden.

Nach dem Einsetzen des Verbindungsteils 5 in die Ausnehmungen 15 wird das Hufeisen am zu beschlagenden Huf fixiert.

Damit ermöglicht die Erfindung nicht nur die Herstellung eines entsprechend flexiblen Hufeisens im Sinne einer Vorfertigung, sondern auch die Verwendung herkömmlicher Hufeisen für das Beschlagen eines Reittiers vor Ort. Wie bereits erwähnt, werden hierfür lediglich einfache Werkzeuge, wie ein Bohrer bestimmten Durchmessers und ein Trennschleifer oder dergleichen benötigt.

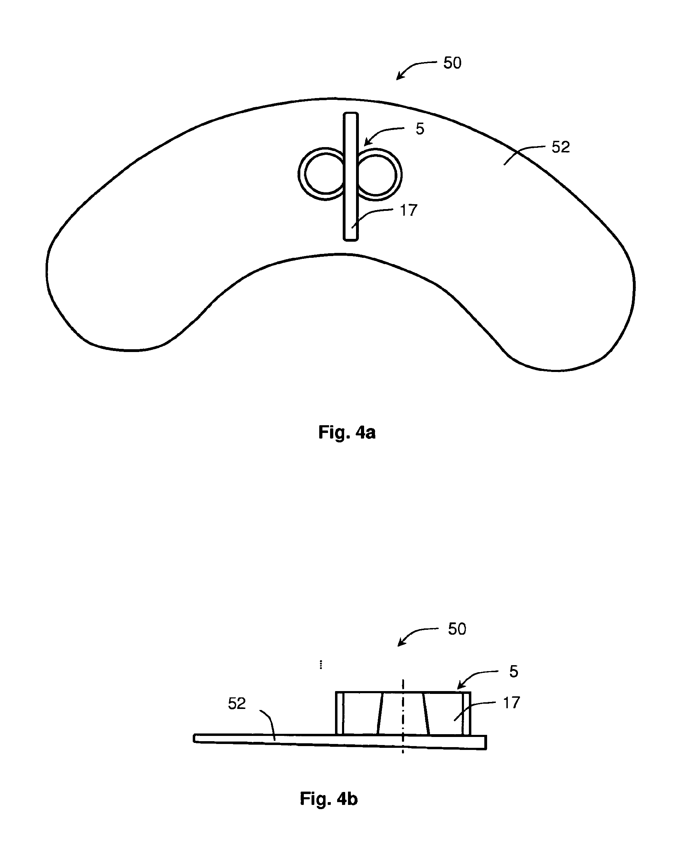

Fig. 4 zeigt eine weitere Ausführungsform eines Verbindungsteils 50 nach der Erfindung, wobei dieses Verbindungsteil 50 aus einem Verbindungsteil 5 nach den Fig. 1 bis 3 besteht, welches, vorzugsweise einstückig mit einer relativ dünnen Montageplatte 52 verbunden ist. Die Montageplatte 52 weist in der Draufsicht eine leicht gebogene Form auf, wobei die Breite in etwa der Breite des Hufeisens in dem betreffenden Bereich entspricht. Die Montageplatte 52 ist an der Unterseite des Verbindungsteils 5 mit diesem verbunden, d.h., an derjenigen Seite bzw. Stirnfläche, die im fertig montierten Zustand dem Huf zugewandt ist.

Die Dicke der Montageplatte beträgt vorzugsweise ca. 0,5 mm bis 3 mm, wobei sich in der Praxis eine Dicke von ca. 1,5 mm bewährt hat. Die Montageplatte besteht vorzugsweise aus demselben Material wie das eigentliche Verbindungsteil 5, was eine einfache Herstellung ermöglicht. Als Material kann wieder ein ausreichend stabiler und dennoch ausreichend elastischer Kunststoff gewählt werden.

Um im montierten Zustand zu vermeiden, dass über größere Strecken das Hufeisen nicht am Huf anliegt, kann die Montageplatte, ausgehend von einer größten Dicke im Bereich der Vorderseite des Verbindungsteils 50 (im Bereich der Vorderseite des Hufs im montierten Zustand) eine abnehmende Dicke aufweisen, wie dies in Fig. 4b dargestellt ist. In der Praxis hat sich eine Verjüngung auf ca. 0,5 mm bis 1 mm als vorteilhaft herausgestellt.

Die Montageplatte 52 hat mehrere Vorteile bzw. Funktionen:
Zum einen dient diese der Stabilisierung des eigentlichen Verbindungsteils 5 und verhindert ein Verwinden bzw. Verbiegen des Verbindungsteils in einer Ebene parallel zur Ebene der Hufunterseite (bzw. des Hufeisens), Dies könnte ansonsten zu einem Verschieben der Hufeisenhälften 3 in dieser Ebene führen, d.h., eine der Hufeisenhälften 3 könnte sich gegenüber der jeweils anderen Hälfte nach vorn (in Richtung auf die Vorderseite des Hufs) oder nach hinten verschieben. Dies wird insbesondere dadurch erreicht, dass die Geometrie und Größe der Montageplatte 52 so gewählt ist, dass diese auf jeder Seite des eigentlichen Verbindungsteils 5 mit einem Hufnagel beim Beschlagvorgang mit dem Hufeisen und dem Huf verbunden wird. Die Montageplatte erstreckt sich hierzu jeweils seitlich des eigentlichen Verbindungsteils 5 bis in den Bereich des Hufeisens in dem wenigstens ein (oder mehrere) Löcher 7 für die Nägel vorgesehen sind.

Zum anderen erleichtert die Montageplatte 52 die Montage des Hufeisens. Das Eindrücken bzw. Einpressen des eigentlichen Verbindungsteils 5 in die Ausnehmungen 13 der Hufeisenhälften 3 kann nur soweit erfolgen, bis die Montageplatte mit der den Hufeisenhälften 3 zugewandten Fläche am Hufeisen anliegt. Ein Durchrutschen des eigentlichen Verbindungsteils 5 wird so auf einfache Weise vermieden.

Schließlich kann die Montageplatte als Dämpfungsschicht zwischen dem Hufeisen und dem Huf dienen und insbesondere große Kräfte oder Drücke auf den Huf reduzieren, wie sie bei

Relativbewegungen des Hufs gegenüber den Hufeisenhälften 3 entstehen können, insbesondere bei Kippbewegungen der (Ebene einer) Hufeisenhälfte gegenüber der Ebene der Hufunterseite.

Selbstverständlich ist die Erfindung nicht beschränkt auf Verbindungsteile mit Montageplatten gemäß der in Fig. 4 dargestellten Ausführungsform. Vielmehr kann eine derartige Montageplatte auch mit beliebig anders geformten "eigentlichen Verbindungsteilen" 5 verwendet werden.

## Patentansprüche

1. Hufeisen für Reittierhufe, insbesondere für Pferde, welches aus zwei starren, im Wesentlichen achssymmetrischen Hufeisenhälften (3) besteht, welche an ihren einander zugewandten Enden (9) mittels eines Verbindungsteils (5, 50) verbunden sind,
**dadurch gekennzeichnet,**
(a) **dass** in jedem der einander zugewandten Enden (9) der Hufeisenhälften (3) eine Ausnehmung (13) vorgesehen ist, die in Richtung der Stirnseite (11) des betreffenden Endes (9) offen ist, wobei die Weite der Ausnehmung (13) im Bereich der Stirnseite (11) kleiner ist als in wenigstens einem der Stirnseite (11) vorgelagerten Bereich,
(b) **dass** das Verbindungsteil (5, 50) aus einem elastischen Material besteht, und
(c) **dass** das Verbindungsteil (5, 50) zwei einander gegenüberliegende Eingriffsbereiche (15) aufweist, die jeweils eine zu den Ausnehmungen (13) im Wesentlichen komplementäre Form aufweisen und in den Ausnehmungen (13) formschlüssig oder kraft- und formschlüssig gehalten sind.

2. Hufeisen nach Anspruch 1, **dadurch gekennzeichnet, dass** die Ausnehmungen (13) zylindrische Bohrungen sind, die senkrecht zu einer Ebene liegen, welche die Lauffläche des Hufeisens (1) bildet, wobei der Abstand der Achsen der Bohrungen von der Stirnfläche (11) der betreffenden Hufeisenhälfte (3) kleiner ist als der Radius der Bohrungen.

3. Hufeisen nach Anspruch 1, **dadurch gekennzeichnet, dass** die Bohrungen als Sacklöcher ausgebildet sind und eine Tiefe aufweisen, welche im Wesentlichen der Dicke der Eingriffsbereiche (15) des Verbindungsteils (5, 50) entspricht.

4. Hufeisen nach Anspruch 1, **dadurch gekennzeichnet, dass** die Bohrungen als Durchgangsbohrungen ausgebildet sind und an der dem Huf zugewandten Fläche eine Einsenkung mit einer vorbestimmten Tiefe aufweisen, wobei der Durchmesser der Einsenkung größer ist als der Bohrungsdurchmesser, und dass die Eingriffsbereiche des Verbindungsteils jeweils einen Kopfbereich aufweisen, welcher in die betreffenden Einsenkungen eingreift.

5. Verbindungsteil zur Verbindung zweier Hufeisenhälften zu einem Hufeisen nach einem der vorhergehenden Ansprüche,
(a) wobei in jedem der einander zugewandten Enden (9) der Hufeisenhälften (3) eine Ausnehmung (13) vorgesehen ist, die in Richtung der Stirnseite (11) des betreffenden Endes (9) offen ist, wobei die Weite der Ausnehmung (13) im Bereich der Stirnseite (11) kleiner ist als in wenigstens einem der Stirnseite (11) vorgelagerten Bereich,
**dadurch gekennzeichnet,**
(b) **dass** das Verbindungsteil (5, 50) aus einem elastischen Material besteht, und
(c) **dass** das Verbindungsteil (5, 50) zwei einander gegenüberliegende Eingriffsbereiche (15) aufweist, die zum kraftschlüssigen oder kraft- und formschlüssigen Eingriff in jeweils eine Ausnehmung (13) ausgebildet sind.

6. Verbindungsteil nach Anspruch 5, **dadurch gekennzeichnet, dass** zumindest die Eingriffsbereiche (15) in der Richtung senkrecht zu ihrer Längserstreckung konisch ausgebildet sind, wobei die Weite der Eingriffsbereiche (15) an der konisch erweiterten Oberseite derart größer gewählt ist als die Weite der zugehörigen Ausnehmung (13) im Ende der betreffenden Hufeisenhälfte (3), dass sich nach dem Einsetzen des Eingriffsbereichs (15) in die Ausnehmung (13) ein Presssitz ergibt.

7. Verbindungsteil nach Anspruch 5 oder 6, **dadurch gekennzeichnet, dass** zwischen den Eingriffsbereichen (15) ein Zentralbereich (17) ausgebildet ist, dessen voneinander abgewandte Stirnflächen, die seitlich des rückwärtigen Endes der Eingriffsbereiche (15) vorgesehen sind, als Anlageflächen für die Stirnflächen der Enden (9) der Hufeisenhälften (3) ausgebildet sind, wobei die Ausdehnung der als Anlageflächen dienenden Stirnflächen vorzugsweise im Wesentlichen der Ausdehnung der Stirnflächen der Enden (9) der Hufeisenhälften (3) beiderseits der stirnseitigen Öffnungen der Ausnehmungen (13) entspricht.

8. Verbindungsteil nach einem der Ansprüche 5 bis 7, **dadurch gekennzeichnet, dass** das Verbindungsteil (50) eine Montageplatte (52) aufweist, welche an einer Stirnseite der Eingriffsbereiche (15) oder einer Stirnseite der Eingriffsbereiche (15) und des Zentralbereichs (17) vorgesehen ist und welche vorzugsweise einstückig mit den Eingriffsbereichen (15) oder den Eingriffsbereichen (15) und dem Zentralbereich (17) verbunden ist.

9. Verbindungsteil nach Anspruch 8, **dadurch gekennzeichnet, dass** die Geometrie der Montageplatte (52) so gewählt ist, dass sich diese im montierten Zustand zumindest bis in jeweils einen Bereich der beiden Hufeisenhälften (3) erstreckt, in welchem jeweils wenigstens ein Loch (7) für einen Hufnagel vorgesehen ist.

10. Verbindungsteil nach Anspruch 8 oder 9, **dadurch gekennzeichnet, dass** die Geometrie der Montageplatte (52) so gewählt ist, dass jeweils die gesamte Stirnseite der Eingriffsbereiche (15), vorzugsweise die gesamte Stirnseite der Eingriffsbereiche (15) und die Stirnseite des Zentralbereichs (17) mit der Montageplatte verbunden ist.

11. Verfahren zur Herstellung eines an einen Huf angepassten Hufeisens nach einem der Ansprüche 1 bis 4, unter Verwendung eines herkömmlichen einteiligen Hufeisens,
(a) bei dem zunächst das herkömmliche einteilige Hufeisen an den Huf angepasst wird;
(b) bei dem anschließend das Hufeisen in zwei Hufeisenhälften (3) getrennt und dann die Ausnehmungen (13) in den einander zugewandten Enden der Hufeisenhälften (3) hergestellt werden oder
(c) bei dem zunächst die Ausnehmungen (13) in dem noch einteiligen Hufeisen hergestellt werden und anschließend das Hufeisen in zwei Hufeisenhälften (3) getrennt wird; und
(d) bei dem anschließend das Verbindungsteil (5, 50) zum Verbinden der Hufeisenhälften (3) mit seinen Eingriffsbereichen (15) in die Ausnehmungen (13) eingesetzt wird.

## Claims

1. Horseshoe for hooves of animals used for riding, in particular for horses, which consists of two rigid substantially axially symmetrical horseshoe halves (3) which have been connected at their ends (9) facing towards one another by means of a connecting part (5, 50),
**characterised**
(a) **in that** in each of the ends (9) of the horseshoe halves (3) facing towards one another a recess (13) has been provided which is open in the direction of the end face (11) of the end (9) in question, the width of the recess (13) in the region of the end face (11) being smaller than in at least one region located in front of the end face (11),
(b) **in that** the connecting part (5, 50) consists of an elastic material, and
(c) **in that** the connecting part (5, 50) exhibits two engagement regions (15) situated opposite one another, which each exhibit a shape substantially complementary to the recesses (13) and have been retained in the recesses (13) in positive manner or in force-closed and positive manner.

2. Horseshoe according to Claim 1, **characterised in that** the recesses (13) are cylindrical bores which are situated perpendicular to a plane that forms the bearing surface of the horseshoe (1), the spacing of the axes of the bores from the end face (11) of the horseshoe half (3) in question being smaller than the radius of the bores.

3. Horseshoe according to Claim 1, **characterised in that** the bores take the form of blind holes and exhibit a depth that corresponds substantially to the thickness of the engagement regions (15) of the connecting part (5, 50).

4. Horseshoe according to Claim 1, **characterised in that** the bores take the form of through-bores and on the surface facing towards the hoof exhibit a hollow having a predetermined depth, the diameter of the hollow being greater than the diameter of the bore, and **in that** the engagement regions of the connecting part each exhibit a top region which engages in the hollows in question.

5. Connecting part for connecting two horseshoe halves so as to form a horseshoe according to one of the preceding claims,
(a) wherein in each of the ends (9) of the horseshoe halves (3) facing towards one another a recess (13) has been provided which is open in the direction of the end face (11) of the end (9) in question, the width of the recess (13) in the region of the end face (11) being smaller than in at least one region located in front of the end face (11),
**characterised**
(b) **in that** the connecting part (5, 50) consists of an elastic material, and
(c) **in that** the connecting part (5, 50) exhibits two engagement regions (15) situated opposite one another, which have been designed for force-closed engagement or force-closed and positive engagement in a respective recess (13).

6. Connecting part according to Claim 5, **characterised in that** at least the engagement regions (15) are of conical design in the direction perpendicular to their longitudinal extent, the width of the engagement regions (15) on the conically widened upper side having been chosen in such a manner to be greater than the width of the associated recess (13) in the end of the horseshoe half (3) in question, **in that** after the insertion of the engagement region (15) into the recess (13) a press fit results.

7. Connecting part according to Claim 5 or 6, **characterised in that** between the engagement regions (15) a central region (17) has been formed, the end faces of which, which face away from one another and have been provided to the side of the rear end of the engagement regions (15), take the form of abutting surfaces for the end faces of the ends (9) of the horseshoe halves (3), whereby the extent of the end faces serving as abutting surfaces preferentially substantially corresponds to the extent of the end faces of the ends (9) of the horseshoe halves (3) on both sides of the end-face openings of the recesses (13) .

8. Connecting part according to one of Claims 5 to 7, **characterised in that** the connecting part (50) exhibits a mounting plate (52) which has been provided on an end face of the engagement regions (15) or on an end face of the engagement regions (15) and of the central region (17) and which has preferentially been connected in one piece to the engagement regions (15) or to the engagement regions (15) and to the central region (17).

9. Connecting part according to Claim 8, **characterised in that** the geometry of the mounting plate (52) has been chosen in such a way that in the mounted state said mounting plate extends at least into a region of each of the two horseshoe halves (3) in which, in each instance, at least one hole (7) for a horseshoe nail has been provided.

10. Connecting part according to Claim 8 or 9, **characterised in that** the geometry of the mounting plate (52) has been chosen in such a way that in each instance the entire end face of the engagement regions (15), preferentially the entire end face of the engagement regions (15) and the end face of the central region (17), has/have been connected to the mounting plate.

11. Process for producing a horseshoe, adapted to a hoof, according to one of Claims 1 to 4, using a conventional one-piece horseshoe,
(a) wherein firstly the conventional one-piece horseshoe is adapted to the hoof;
(b) wherein subsequently the horseshoe is separated into two horseshoe halves (3) and then the recesses (13) in the ends of the horseshoe halves (3) facing towards one another are produced or
(c) wherein firstly the recesses (13) in the still one-piece horseshoe are produced and subsequently the horseshoe is separated into two horseshoe halves (3); and
(d) wherein subsequently the connecting part (5, 50) for connecting the horseshoe halves (3) to its engagement regions (15) is inserted into the recesses (13).

## Revendications

1. Fer à cheval pour sabot d'animal de selle, plus particulièrement pour chevaux, constitué de deux moitiés de fer à cheval (3) sensiblement symétriques par rapport à une axe, reliées, au niveau de leurs extrémités (9), orientées l'une vers l'autres, à l'aide d'un élément de liaison (5, 50),
**caractérisé en ce que**
(a) dans chacune des extrémités (9) orientées l'une vers l'autres des moitiés de fer à cheval (3) est prévu un évidement (13), qui est ouvert en direction de la face frontale (11) de l'extrémité (9) correspondante, la largeur de l'évidement (13) étant, au niveau de la face frontale (11), inférieure à celle d'au moins une partie précédant la face frontale (11),
(b) l'élément de liaison (5, 50) est constitué d'un matériau élastique, et
(c) l'élément de liaison (5, 50) comprend deux parties d'emboîtement (15) qui se font face et qui comprennent chacune une forme sensiblement complémentaire des évidements (13) et sont maintenues dans les évidements (13) par complémentarité de forme ou par force et par complémentarité de forme.

2. Fer à cheval selon la revendication 1, **caractérisé en ce que** les évidements (13) sont des alésages cylindriques perpendiculaires à un plan qui forme la semelle du fer à cheval (1), la distance entre les axes des alésages et la face frontale (11) de la moitié de fer à cheval (3) correspondante étant inférieure au rayon des alésages.

3. Fer à cheval selon la revendication 1, **caractérisé en ce que** les alésages sont conçus comme des trous borgnes et présentent une profondeur correspondant sensiblement à l'épaisseur des parties d'emboîtement (15) de l'élément de liaison (5, 50).

4. Fer à cheval selon la revendication 1, **caractérisé en ce que** les alésages sont conçus comme des trous traversants et présentent, sur la surface orientée vers le sabot, une dépression avec une profondeur prédéterminée, le diamètre de la dépression étant supérieur au diamètre des alésages, et **en ce que** les parties d'emboîtement de l'élément de liaison présentent chacune une partie de tête qui s'emboîte dans les dépressions correspondantes.

5. Elément de liaison pour la liaison de deux moitiés de fer à cheval afin d'obtenir un fer à cheval selon l'une des revendications précédentes,
(a) dans chacune des extrémités (9) des moitiés de fer à cheval (3), orientées l'une vers l'autre, un évidement (13) étant prévu, qui est ouvert en direction de la face frontale (11) de l'extrémité (9) correspondante, la largeur de l'évidement (13) au niveau de la face frontale (11) étant inférieure à celle dans au moins une partie précédant la face frontale (11),
**caractérisé en ce que**
(b) l'élément de liaison (5, 50) est constitué d'un matériau élastique, et **en ce que**
(c) l'élément de liaison (5, 50) comprend deux parties d'emboîtement (15) qui se font face et qui sont conçues chacune pour un emboîtement par force ou par force et par complémentarité de forme dans un évidement (13).

6. Elément de liaison selon la revendication 5, **caractérisé en ce qu'**au moins les parties d'emboîtement (15) sont conçues de manière conique perpendiculairement à leur extension longitudinale, la largeur des parties d'emboîtement (15) au niveau du côté supérieur élargi de manière conique étant supérieure à la largeur de l'évidement (13) correspondant à l'extrémité de la moitié de fer à cheval (3) correspondante, de façon à ce qu'un montage à force soit obtenu après l'insertion de la partie d'emboîtement (15) dans l'évidement (13).

7. Elément de liaison selon la revendication 5 ou 6, **caractérisé en ce que**, entre les parties d'emboîtement (15), une partie centrale (17) est réalisée, dont les faces frontales opposées, qui sont prévues sur le côté de l'extrémité arrière des parties d'emboîtement (15), sont conçues comme des surfaces d'appui pour les faces frontales des extrémités (9) des moitiés de fer à cheval (3), l'extension des faces frontales servant de surfaces d'appui correspondant, de préférence sensiblement, à l'extension des faces frontales des extrémités (9) des moitiés de fer à cheval (3) des deux côtés des ouvertures frontales des évidements (13).

8. Elément de liaison selon l'une des revendications 5 à 7, **caractérisé en ce que** l'élément de liaison (50) présente une plaque de montage (52), qui est prévue sur un côté frontal des parties d'emboîtement (15) ou un côté frontal des parties d'emboîtement (15) et de la partie centrale (17), et qui est reliée, de préférence d'une seule pièce, avec les parties d'emboîtement (15) ou les parties d'emboîtement (15) et la partie centrale (17).

9. Elément de liaison selon la revendication 8, **caractérisé en ce que** la géométrie de la plaque de montage (52) est choisie de façon à ce que celle-ci s'étende, dans l'état monté, au moins jusqu'à une partie des deux moitiés de fer à cheval (3), dans laquelle se trouve au moins un trou (7) pour un clou à ferrer.

10. Elément de liaison selon la revendication 8 ou 9, **caractérisé en ce que** la géométrie de la plaque de montage (52) est choisie de façon à ce que tout le côté frontal des parties d'emboîtement (15), de préférence tout le côté frontal des parties d'emboîtement (15) et le côté frontal de la partie centrale (17), est relié à la plaque de montage.

11. Procédé de fabrication d'un fer à cheval adapté à un sabot selon l'une des revendications 1 à 4, à l'aide d'un fer à cheval traditionnel d'une seule pièce,
(a) dans lequel le fer à cheval traditionnel d'une seule pièce est d'abord adapté au sabot ;
(b) dans lequel le fer à cheval est ensuite séparé en deux moitiés de fer à cheval (3), puis les évidements (13) sont réalisés dans les extrémités orientées l'une vers l'autre des moitiés de fer à cheval (3) ou
(c) dans lequel les évidements (13) sont d'abord réalisés dans le fer à cheval encore d'une seule pièce puis le fer à cheval est séparé en deux moitiés de fer à cheval (3) ; et
(d) dans lequel l'élément de liaison (5, 50) pour la liaison des moitiés de fer à cheval (3) est ensuite inséré avec ses parties d'emboîtement (15) dans les évidements (13).
